# EUROPEAN PATENT APPLICATION

(11) **EP 1 953 651 A1**
(43) Date of publication of application: **06.08.2008**
(21) Application number: 07101514.3
(22) Date of filing: 31.01.2007
(51) Int. Cl.: G06F 17/24, G06F 3/12

(54) **A method for preparing mail pieces and a data carrier and mail preparation systems for use therein**

(71) Applicant: Neopost Technologies, 92220 Bagneux (FR)
(72) Inventor: Sytema, Herman, 8493 RD Therhorne (NL)
(74) Representative: van Loon, C.J.J.

(57) **Abstract**

For generating and printing documents and preparing mail pieces from the printed documents, a word processing program running on a data processor (1), a printer (4) for printing documents and a mail preparation system (5) are used. Data for selectively controlling the mail preparation system (5) are included in the data source used for a mail merge operation under control of the word processing program. At least one function of the mail preparation system (5) is selectively controlled for each individual document in response to the data for selectively controlling the mail preparation system (5) from the data fields associated to that respective individual document.

## Description

### FIELD AND BACKGROUND OF THE INVENTION

The invention relates to a method for preparing mail pieces and to a kit of parts and mail preparation systems for use therein.

For the processing of printed documents into mail pieces in a mail preparation system, it is known to read optical marks, such as OMR marks or barcodes from the documents. Such optical marks represent predetermined instructions for controlling functions of the mail preparation system, such as the selective addition of inserts from insert feeding stations and the collection of sequentially supplied documents into a set that is to be inserted in an envelope. Generally, the optical marks are simple indicia that are accordingly easily machine readable and dedicated for mail preparation systems of a particular model range or brand.

For the preparation of documents provided with such optical marks, special software is used, such as software for processing an ASCII string output from legacy mainframe systems or software for parsing and processing a print stream into an enhanced print stream including instructions for printing the required optical marks.

In particular for small scale applications, the need of obtaining, maintaining and using such special software is considered to be too costly and cumbersome. It is probably for this reason, that the use of selective control of functions for the preparation of mail pieces on a small scale has thus far remained very limited.

### SUMMARY OF THE INVENTION

It is an object of the present invention to provide a low cost and easily implementable solution for providing automatic selective control over one or more mail preparation functions in a mail preparation system.

According to one aspect of the invention, this object is achieved by providing a method according to claim 1.

Because a mail merge facility of a word processing program is used to include the selective control over functions of the mail preparation process, the addition of such selective control does not require separate software. Accordingly, the addition of such selective control over mail preparation functions is easily implementable at low costs, which is of particular importance for use of such features in small scale applications, such as in mailings sent by small and medium sized enterprises.

The invention may also be embodied in a kit of parts according to claim 7 and in a data carrier according to claim 8, which are specifically adapted for providing or as facilities for carrying out particular embodiments of the method according to the invention.

Particular elaborations and embodiments of the invention are set forth in the dependent claims.

Further features, effects and details of the invention appear from the detailed description and the drawings.

### BRIEF DESCRIPTION OF THE DRAWINGS

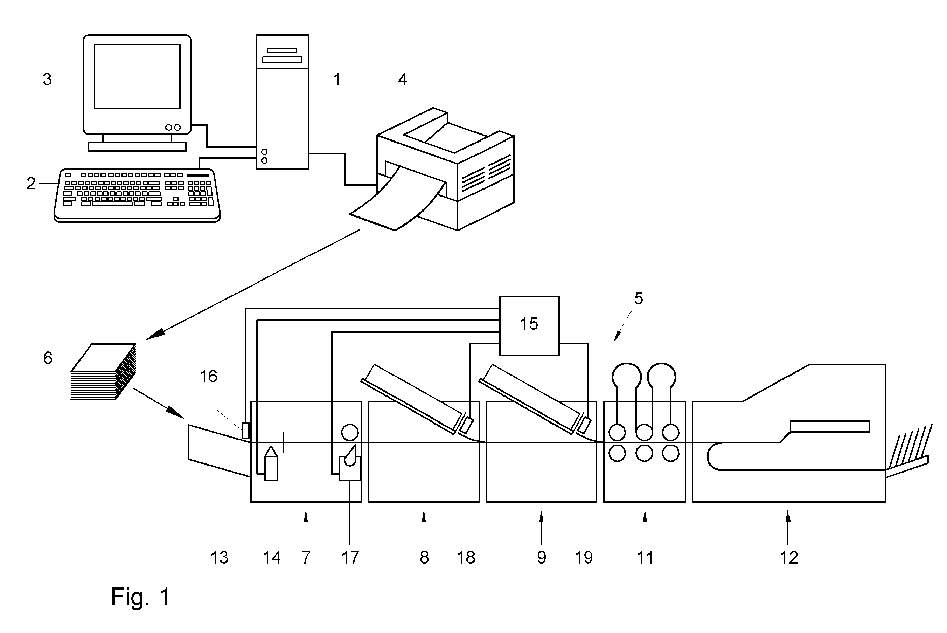

Fig. 1 is a schematic representation of a system for use in a method according to the present invention;
Fig. 2 shows an example of form letter for use in a method according to the invention in a mode showing field codes;
Fig. 3 shows an example of data source for use in a method according to the invention;
Fig. 4 shows an example of an object to which a field in the form letter refers;
Figs. 5, 7, 8 and 10 each show a first page of a letter printed by merging the form letter according to Fig. 2, the data source shown in Fig. 2 and the object shown in Fig. 3; and
Figs. 6, 9 and 11 each show a second page of a letter printed by merging the form letter according to Fig. 2, the data source shown in Fig. 2 and the object shown in Fig. 3.

### DETAILED DESCRIPTION

For the preparation of mailings to larger numbers of addressees, typically a computer 1 with peripherals including a keyboard 2, a display 3 and a printer 4 is used. On the computer 1 a digital document may be edited using a word processing computer program.

To automatically prepare a large number of documents that are to some extent individualized for the respective addressees, word processing software typically includes code providing a so-called mail merge functionality, which allows to prepare a large number of individualized documents from a form letter and a data source. The form letter includes merge fields that refer to data fields in the data source en when the form letter and the data source are merged, the result is a plurality of digital documents each containing data from the referred data fields in the data source inserted in the respective merge fields. The digital documents may be stored temporarily, or only exist temporarily in a print stream that is sent to the printer 4.

The mail preparation system includes an assembling station 7, a first insert feeding station 8, a second insert feeding station 9, a folding station 11 and an inserting station 12. The printed documents may be supplied from the printer 4 to a mail preparation system 5 individually or, as in the present example, as a stack 6. When the documents are processed in the mail preparation system 5, documents are separated and fed individually from a stack in a hopper 13 of the assembling station 7 and gathered by the assembling station 7 into sets that are each intended to be folded together and to be inserted in a common envelope.

The assembling station 7 is equipped with an optical mark reading unit 14 suitable for optically reading indicia from documents that are or have been fed from the hopper 13. The reading unit 14 is connected to a data processor unit 15 of the inserting system. The data processing unit 15 is connected to a sheet feeding structure 16 and to a transport unit 17 of the assembling station 7 for selectively controlling the gathering of sets and the transportation of sets out of the assembling station 7 in accordance with indicia read from at least some of the documents that have been fed from the hopper 13.

The data processor unit 15 is also connected to feeding units 18, 19 of the first and second insert feeding stations 8, 9 for selectively feeding and separating inserts from hoppers of the first and second insert feeding stations 8, 9 respectively, in accordance with indicia read from at least some of the documents that have been fed from the hopper 13.

According to the present example of an implementation of the present invention, the generation and printing of documents and the preparation mail pieces from the printed documents is carried out as is described below.

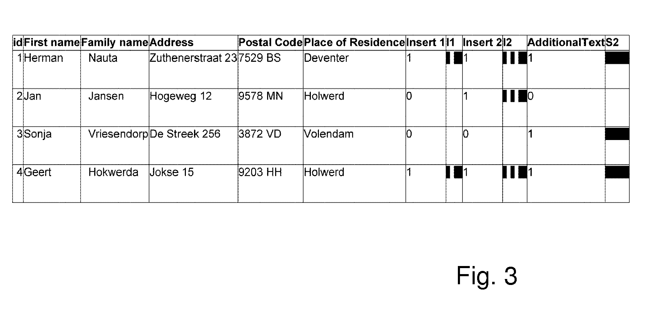

On the computer 1, a word processing program is installed. The word processing program is activated and a mail merge data source (see Fig. 3) containing data to be included in the documents is provided. In the present example, the data source is a document in a word processing format. It is however also possible to provide a different type of data source, for instance in the form of a spreadsheet, a database, or a comma separated file.

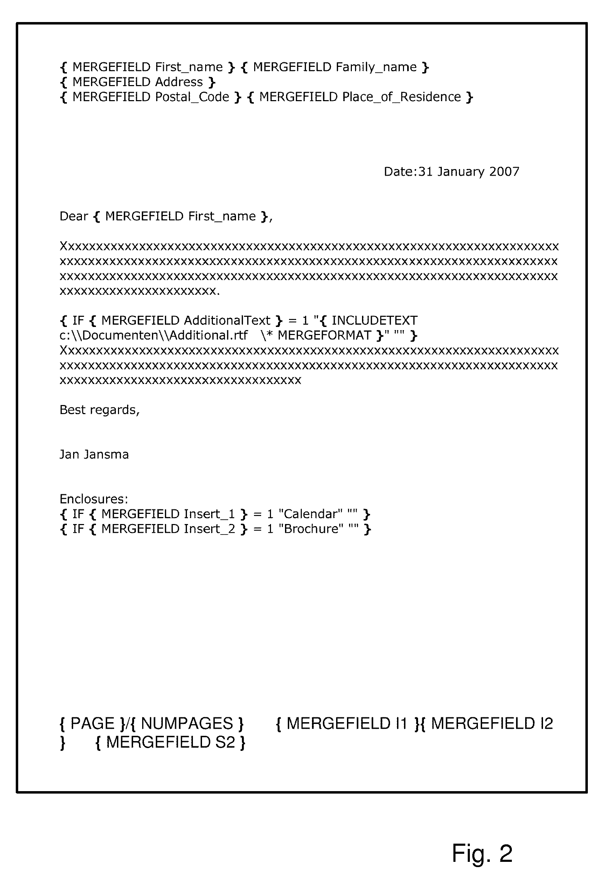

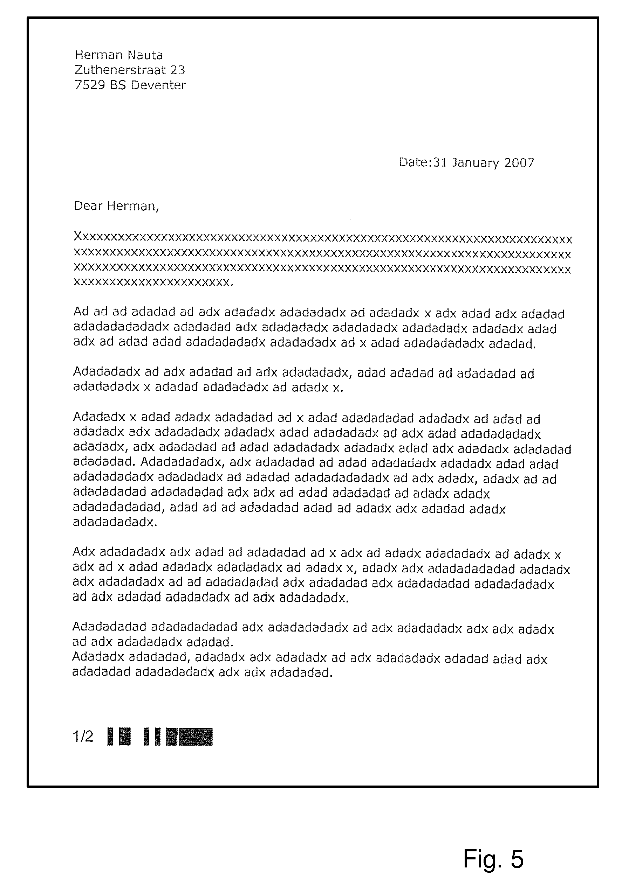

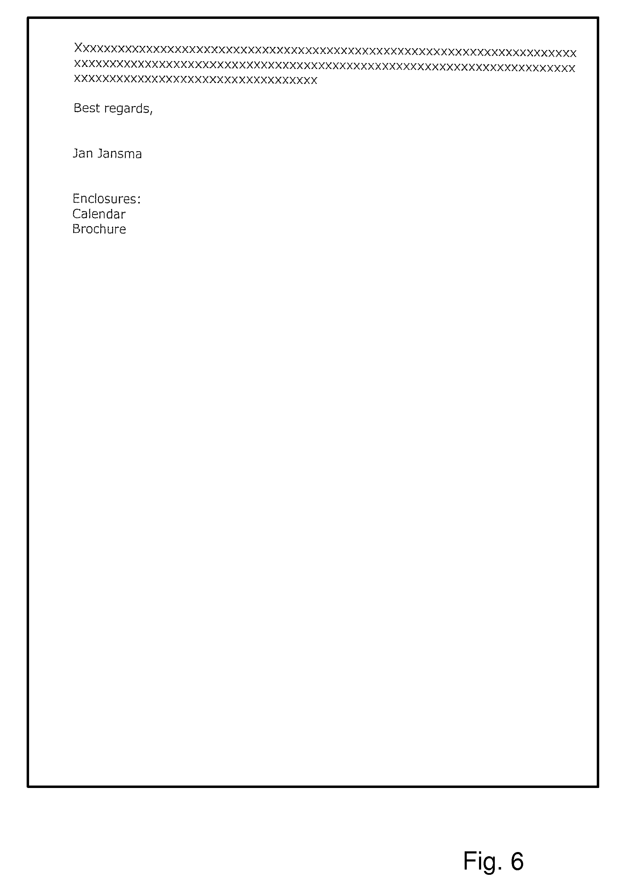

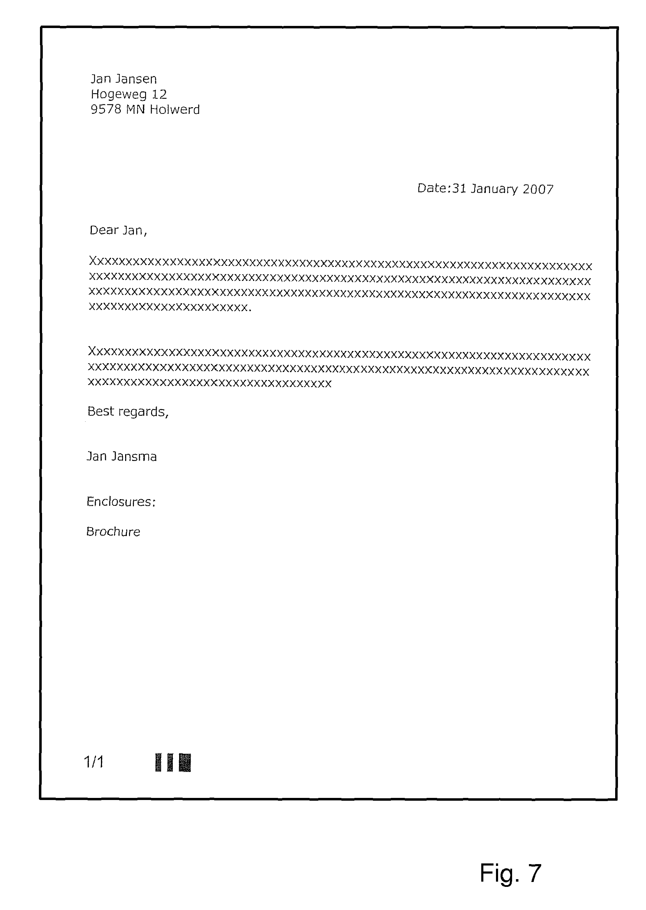

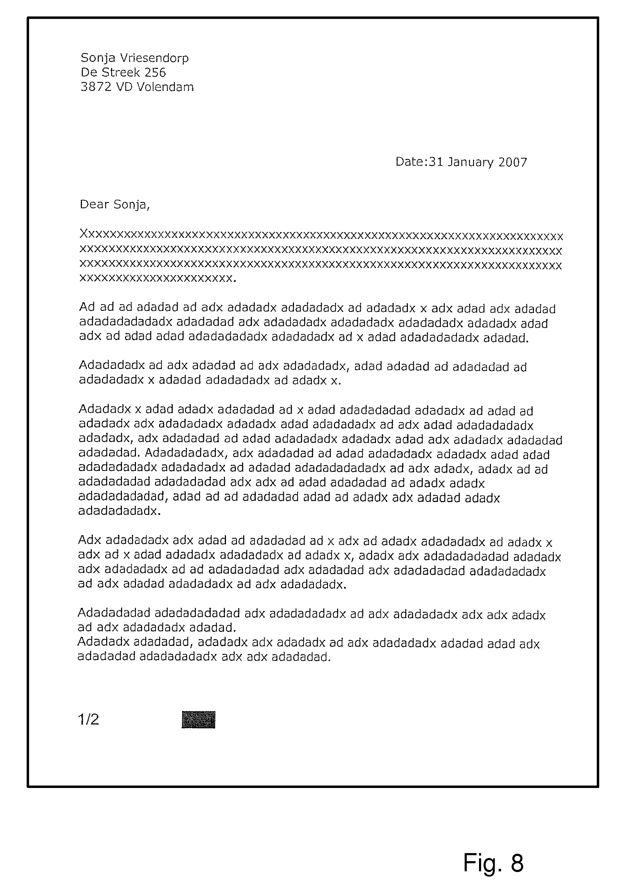

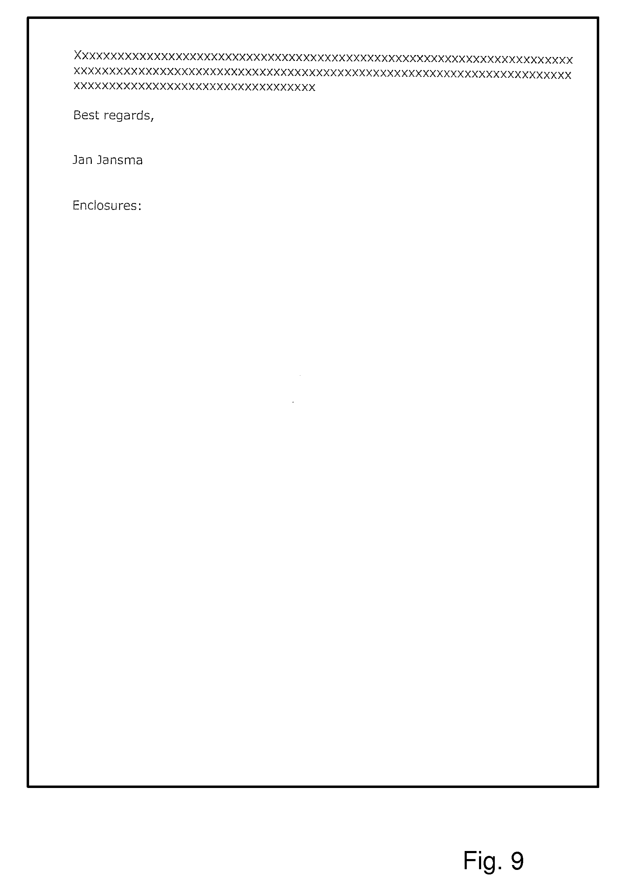

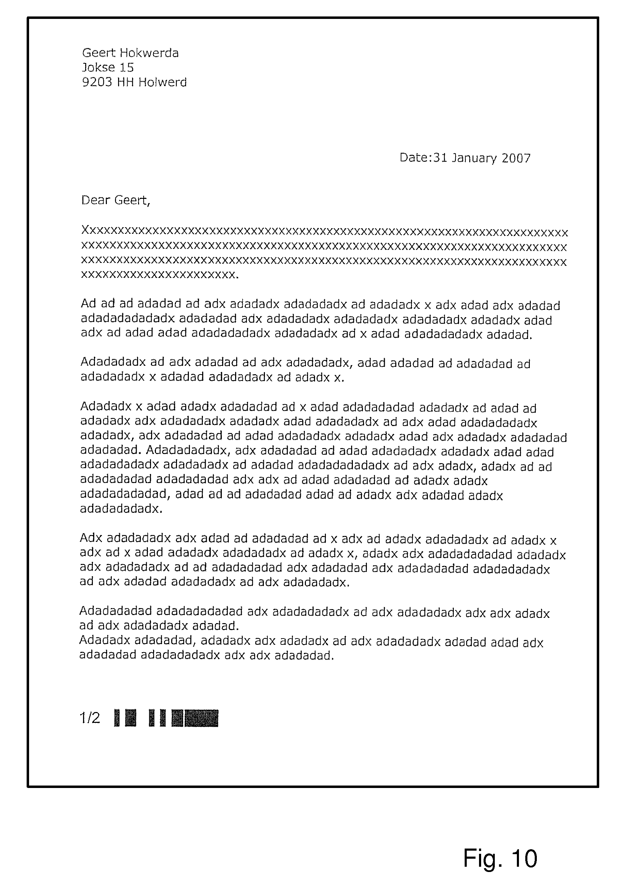

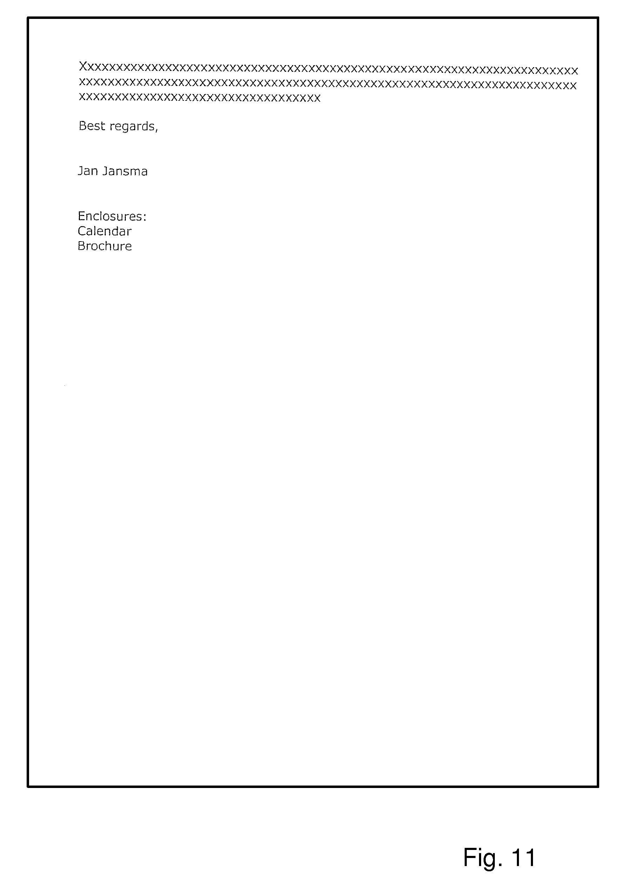

The data source may be edited using the computer, but may also be made available elsewhere, for instance as a read-only source on a remote server communicating with the computer 1. The data to be included in the documents are arranged in data fields each associated to a merge field and to an individual one of the documents. For instance, in the present example, the fields shown in the row containing id "1" are associated to a first one of the documents (see Figs. 5 and 6), the fields shown in the row containing id "2" are associated to a second one of the documents (see Fig. 7), the fields shown in the row containing id "3" are associated to a third one of the documents (see Figs. 8 and 9) and the fields shown in the row containing id field "1" are associated to a fourth and last one of the documents (see Figs. 10 and 11). In practice, the number of documents will typically be much larger than the number in the present example, which has been selected for the purpose of illustrating some principles and modes of operation. Furthermore, all fields in for instance the column "First name" are associated to the merge field "First_name" (see Fig. 2) of each respective one of the documents.

The digital main document displayed in Fig. 2 is a document in a format of the word processing program "Microsoft Word". The document contains generic information to be included in each of the individual documents. In the present example, this generic information is in the form of text blocks, for the present illustrative purpose mainly represented by X's. The digital main document further contains function fields indicated by brackets "{" and "}" at the beginning and the end thereof. The function fields include merge fields designated by the word "MERGEFIELD" and referring to a column of fields in the data source and word processing fields "IF" indicating an if then function, "PAGE" inserting the page number and "NUMPAGES" inserting a number indicating the total number of pages of a document.

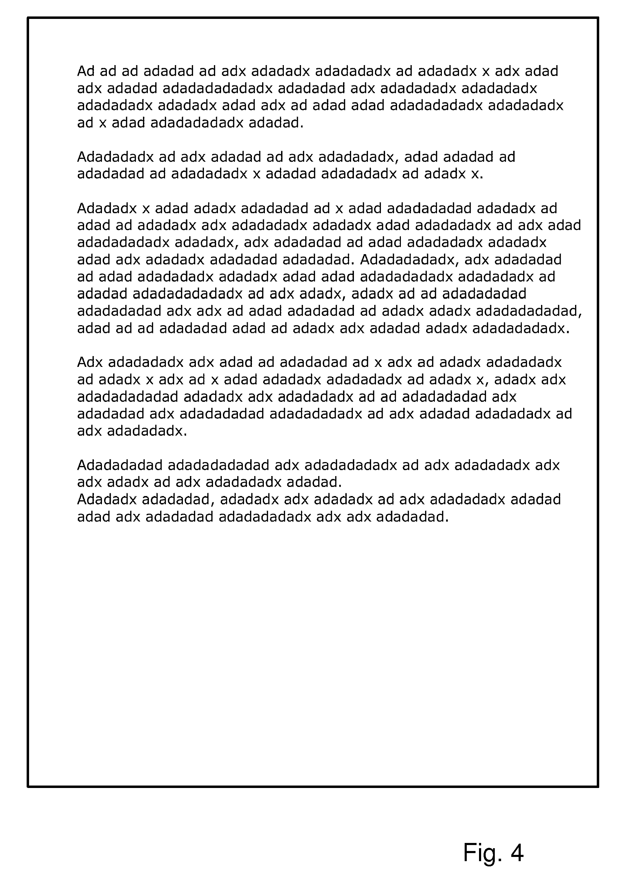

When a mailing is to be prepared on the basis of the digital main document shown in Fig. 2, the data source shown in Fig. 3 and the additional text shown in Fig. 4, the digital main document, the mail merge data source and the additional text are processed into print data representing the individual documents to be printed (see Figs. 5-11). The individual documents to be printed include the associated data from data fields in the mail merge data source in the positions of the merge fields to which the data fields are associated.

For instance, in the document shown in Fig. 5, the name "Herman" from the field of Fig. 3 where the row of id "1" and the column "First name" intersect. In the present example, it is also provided by an "IF" filed that in the documents for which the data field "AdditionalText" = "1", an additional text from the document shown in Fig. 4 is inserted. If the additional text is inserted, the document covers two pages. If the additional text is not inserted, the document covers only one page. This requires that the assembling station 7 gathers two sheets for the mail pieces of which the main document consists of two pages and a single sheet gathers one sheets for the mail pieces of which the main document consists of one page.

After the documents shown in Figs. 5-11 have been printed, in accordance with the print data, the stack of printed documents 6 is transported from the printer 4 to the hopper 13 of the mail preparation system 5, where the printed documents are processed into mail pieces.

To selectively control the gathering of documents by the assembling station 7 and the feeding, by the insert feeding stations 8, 9 of inserts to be added to the main documents, the mail merge data source shown in Fig. 3 include data for selectively controlling the mail preparation system in the columns "I1", "12" and "S2". In the present example, if the value of the data field "Insert 1" = 1, the data field in the same row in the column "I1" has a value for printing an optical mark consisting of a narrow and a wide post. This optical mark is readable by the optical mark reader 14 and signifies that a sheet is to be added to a main document bearing that optical mark by the first insert feeding station 8. Similarly, the data source of Fig. 3 provides for special optical marks to be printed if the data field "Insert 2" or, respectively, the data field "AdditionalText" has the value "1". The latter special optical mark signifies that the main document consists of two sheets, i.e. that the sheet from which the mark has been read is to remain in the assembling station 7 until the second sheet of the document is stacked thereon (the sheets are fed into the assembling station 7 in a face down orientation).

The positions where the optical marks from the columns "I1", "I2" and "S2" are printed are determined by the mail merge fields "MAILMERGE I1", "MAILMERGE I2" and "MAILMERGE S2" at the bottom of the digital main document as represented by Fig. 2. Thus, optical marks for controlling the mail preparation system 5 are printed under control of a mail merge function which is a standard functionality of most presently available word processing programs and without making use of special software for post processing of data defining documents of a mailing.

Finally, the functions of gathering and adding inserts of the mail preparation system 5 are selectively controlled for each individual document in response to the data for selectively controlling the mail preparation system 5 from the data fields associated to the respective individual documents.

Because the data for selectively controlling the mail preparation system 5 are communicated to the mail preparation system 5 by printing indicia representing the data for selectively controlling the mail preparation system and reading the printed data for selectively controlling the mail preparation system 5 from the printed individual documents, reliable control over the mail preparation system 5 is achieved in a simple manner.

The optical marks may be provided in the form of dedicated optical marks of which the position and/or the shape represent predetermined instructions as in so-called OMR marks. However, it is also possible to provide that the optical marks are printed in the form of standardized bar codes.

Another function that may be controlled by the printed optical marks is the indication of the beginning or the end of a set of sheets for a mail piece.

In the present example, the data source contains columns containing the control marks to be printed. It is however also possible to control the printing of the optical marks using conditional fields, such as "IF" fields, referring to merge fields containing data representing the marks to printed if the condition specified in the conditional field is applicable.

In accordance with yet another, particularly easily implementable embodiment of the invention, it is provided that the data for controlling the mail preparation system are included in the mail preparation source in the form of ASCII code characters and that, for the merge fields to which the data fields containing data for controlling the mail preparation system are associated, a predetermined, preferably non-ASCII, optical mark font set associating an ASCII code character to each optical mark of that font set is selected. Each optical mark of the font set represents at least one instruction for a mail preparation function.

In response to an ASCII code character for which the optical mark font set has been selected as applicable font set, the optical mark of that font set associated to the respective ASCII code character is selected and printed on the individual document to which the data field containing that ASCII code character is associated and at least one function of the mail preparation system is selectively controlled in accordance with the predetermined instructions represented by the printed optical marks read from the printed individual documents. Thus, optical control marks that are readable with relatively simple reading instruments can be provided on documents in a particularly simple manner. The font set may for instance be a font set that includes a bar code for at least a plurality of ASCII codes. Such font sets are available.

To implement the present embodiment of the invention, a kit of parts may be provided that includes a data carrier structure carrying an optical mark font set associating an ASCII code character to each, preferably non-ASCII optical control mark of that font set. The kit further includes a mail preparation system including an optical mark reader for reading optical marks from documents to be processed, and a data processor connected to the optical mark reader and arranged for converting read optical marks from the font set into instructions for selectively controlling functions of the mail preparation system in accordance with conversion rules. These conversion rules associate a predetermined instruction to each of the marks of said group.

According to yet another alternative within the framework of the present invention, each of a plurality of ASCII code characters is associated to a predetermined mail preparation function and the data for controlling the mail preparation system are included in the mail preparation source in the form of ASCII code characters, which may be of a particular design and/or in a predetermined, particular location. When the printed documents are processed, the function or functions of the mail preparation system are selectively controlled in accordance with the predetermined instructions associated to the ASCII code characters read from the printed individual documents. Against the disadvantage of control marks that are less easily machine readable, the advantage is achieved, that no special data for conversion of ASCII code into special control marks needs to be provided and installed.

A mail preparation system that is specifically adapted for use in a method according to the present alternative preferably includes, apart from an optical mark reader as discussed above, a data processor arranged for converting read ASCII code characters into instructions for selectively controlling functions of the mail preparation system in accordance with conversion rules. These conversion rules associate a predetermined instruction to each of at least a number of the ASCII code characters.

It is however also possible to control functions of a mail preparation system via a mail merge function of a word processing program without printing of indicia for controlling the respective function of a mail preparation system. This can be achieved by processing at least some of the data for controlling the mail preparation system in the mail merge data source into a mail preparation control data source and reading data from the mail preparation control data source in an order corresponding to the order in which the printed documents are processed by the mail preparation system. The mail preparation system can then be controlled selectively in accordance with the data read from the mail preparation control data source.

Other variations to the disclosed embodiments can be understood and effected by those skilled in the art in practicing the claimed invention, from a study of the drawings, the disclosure, and the appended claims. For instance, in accordance with a variant on the option of processing at least some of the data for controlling the mail preparation system in the mail merge data source into a mail preparation control data source, it can be provided that, after the documents have been printed, the data for controlling the mail preparation system are read from the mail merge data source in an order corresponding to the order in which the printed documents are processed by the mail preparation system. This option is particularly simple, because it only requires that data from particular columns of the mail merge data source (or of a copy thereof) are read.

## Claims

1. A method for generating and printing documents and preparing mail pieces from the printed documents, using a word processing program running on a data processor (1), a printer (4) for printing documents and a mail preparation system (5) for processing printed documents into mail pieces, the method comprising:
providing a mail merge data source containing data to be included in the documents, the data to be included in the documents being arranged in data fields each associated to a merge field and to an individual one of the documents;
providing a digital main document containing generic information to be included in each of the individual documents and the merge fields to which the data fields in the mail merge data source are associated;
processing the digital main document and the mail merge data source into print data representing the individual documents to be printed, the individual documents to be printed including the associated data from data fields in the mail merge data source in the positions of the merge fields to which said data fields are associated;
printing of the individual documents by the printer (4) in accordance with the print data; and
processing the printed documents into mail pieces by the mail preparation system (5);
wherein the mail merge data source includes data for selectively controlling the mail preparation system (5); and
wherein at least one function of the mail preparation system (5) is selectively controlled for each individual document in response to the data for selectively controlling the mail preparation system (5) from the data fields associated to that respective individual document.

2. A method according to claim 1, wherein the printing includes printing of indicia representing said data for selectively controlling the mail preparation system (5), wherein the printed data for selectively controlling the mail preparation system (5) are read from the printed individual documents and wherein the at least one function of the mail preparation system (5) is selectively controlled in accordance with the data read from the printed individual documents.

3. A method according to claim 2,
wherein the data for controlling the mail preparation system (5) are included in the mail preparation source in the form of ASCII code characters;
wherein, for the merge fields to which the data fields containing data for controlling the mail preparation system (5) are associated, a predetermined optical mark font set associating an ASCII code character to each optical mark of said font set is selected, each optical mark of said font set representing at least one instruction for a mail preparation function;
wherein, in response to an ASCII code character for which said optical mark font set has been selected as applicable font set, the optical mark of said font set associated to the respective ASCII code character is selected and printed on the individual document to which the data field containing said ASCII code character is associated; and
wherein the at least one function of the mail preparation system (5) is selectively controlled in accordance with the predetermined instructions represented by the printed optical marks read from the printed individual documents.

4. A method according to claim 2,
wherein each of a plurality of ASCII code characters is associated to a predetermined mail preparation function;
wherein the data for controlling the mail preparation system (5) are included in the mail preparation source in the form of ASCII code characters;
wherein the at least one function of the mail preparation system (5) is selectively controlled in accordance with the predetermined instructions associated to the ASCII code characters read from the printed individual documents.

5. A method according to any one of the preceding claims, further comprising:
processing at least some of the data for controlling the mail preparation system (5) in the mail merge data source into a mail preparation control data source;
reading data from the mail preparation control data source in an order corresponding to the order in which the printed documents are processed by the mail preparation system (5); and
selectively controlling the mail preparation system (5) in accordance with the data read from the mail preparation control data source.

6. A method according to claim 1, further comprising:
after the documents have been printed, reading data for controlling the mail preparation system (5) from the mail merge data source in an order corresponding to the order in which the printed documents are processed by the mail preparation system (5); and
selectively controlling the mail preparation system (5) in accordance with the data read from the mail preparation control data source.

7. A kit of parts comprising:
a data carrier structure carrying an optical mark font set associating an ASCII code character to each optical mark of said font set, such that, after installation of the optical mark font set on a computer on which a word processing program is installed, in response to an ASCII code character for which said optical mark font set has been selected as applicable font set, the optical mark of said font set associated to the respective ASCII code is selected; and
a mail preparation system (5) comprising an optical mark reader for reading optical marks from documents to be processed, and a data processor (1) connected to the optical mark reader and arranged for converting read optical marks from said font set into instructions for selectively controlling functions of the mail preparation system (5) in accordance with conversion rules, said conversion rules associating a predetermined instruction to each of the marks of said group.

8. A mail preparation system (5) comprising an optical mark reader for reading optical marks from documents to be processed, and a data processor (1) arranged for converting read ASCII code characters into instructions for selectively controlling functions of the mail preparation system (5) in accordance with conversion rules, said conversion rules associating a predetermined instruction to each of at least a plurality of said ASCII code characters.
